# DEMANDE DE BREVET EUROPEEN

(11) **EP 3 343 469 A1**
(43) Date de publication de la demande: **04.07.2018**
(21) Numéro de dépôt: 17186485.3
(22) Date de dépôt: 16.08.2017
(51) Int. Cl.: G06Q 10/00

(54) **PROCÉDÉ DE PLANIFICATION D'ENTRETIEN POUR EQUIPEMENTS D'AÉRONEF**

(30) Priorité: 02.01.2017 BE 201704999
(71) Demandeur: Safran Aero Boosters SA, 4041 Herstal (BE)
(72) Inventeur: PEREZ, Rafael, 4100 Boncelles (BE)
(74) Mandataire: Lecomte & Partners

(57) **Abrégé**

L'invention concerne un procédé de planification d'entretien d'équipements d'aéronefs avec des identifiants, remarquable en ce que le procédé comprend les étapes de : (a) enregistrement (100) des identifiants d'aéronefs associés aux équipements ; (b) consultation (102) d'une base de donnée d'enregistrement en temps réel des données de vol des aéronefs à identifiants ; (c) détermination (104) des données de fonctionnement des équipements en fonction de l'identifiant de leur aéronef et de l'étape (b) consultation (102) ; puis (d) planification (106) des entretiens des équipements en fonction des données de fonctionnement.

## Description

### Domaine technique

L'invention se rapporte concerne l'entretien d'un équipement d'aéronef. Plus précisément, l'invention concerne un procédé de planification d'entretien d'un équipement d'aéronef.

### Technique antérieure

La maintenance prédictive d'un turboréacteur vise à en augmenter la durée de vie comme la fiabilité et le rendement. Elle tend à éviter les pannes imprévues risquant d'immobiliser un avion le temps de la réparation. Par ailleurs, agir de manière anticipée permet de contrôler et de limiter l'ampleur des réparations lorsqu'elles deviennent nécessaires.

Le document US 6,473,677 B1 divulgue un système pour déterminer un calendrier de maintenance d'un moteur à réaction. Le système s'appuie sur un plan de vol d'un moteur à réaction, ledit plan comportant les lieux de décollage et de vol, ainsi que les données des cycles thermiques et la durée sous aile. Les données environnementales sont également prises en compte dans l'élaboration du calendrier de maintenance.

Or, les plans de vol sont des données propres aux compagnies aériennes. Dès lors, une entreprise possédant et entretenant des moteurs à réaction utilisées par différentes compagnies aériennes ne connait pas précisément comment ses moteurs sont utilisés. Dès lors, il doit estimer des fréquences d'entretien théoriques sur la base de probabilités plus ou moins précises. En complément, les turboréacteurs doivent être conçus avec des marges de sécurité qui augmentent avec l'incertitude pesant sur leurs modes de sollicitation. Ces marges de sécurité alourdissent les turboréacteurs et rapprochent les dates d'entretien. Dès lors la précision de l'entretien diminue, tout comme la sécurité d'exploitation.

### Résumé de l'invention

### Problème technique

L'invention a pour objectif de résoudre au moins un des problèmes posés par l'art antérieur. Plus précisément, l'invention a pour objectif d'améliorer la précision de l'entretien d'équipements d'aéronefs. L'invention a également pour objectif de proposer une solution simple, rapide, économique, facile à mettre en oeuvre, et améliorant la sécurité.

### Solution technique

L'invention a pour objet un procédé exécuté par un ordinateur de planification d'entretien d'équipements pour aéronef à identifiant, remarquable en ce que le procédé comprend les étapes de : (a) enregistrement informatique des identifiants d'aéronefs correspondant aux équipements à entretenir; (b) consultation informatique d'une base de donnée d'enregistrement en temps réel des données de vol des aéronefs en fonction de leurs identifiants ; (c) détermination informatique des données de fonctionnement des équipements en fonction de l'identifiant de leur aéronef correspondant, et des données de vol de l'étape (b) consultation ; puis (d) planification , éventuellement informatique, des entretiens des équipements en fonction des données de fonctionnement. Selon des modes avantageux de l'invention, le procédé peut comprendre une ou plusieurs des caractéristiques suivantes, prises isolément ou selon toutes les combinaisons techniques possibles :
- L'étape (d) planification comprend le calcul d'un score d'intensité d'utilisation d'équipement, la planification d'entretiens de l'étape (d) planification étant effectuée en fonction du score.
- L'étape (d) planification comprend une détermination d'usure mécanique du ou des équipements, la planification d'entretiens de l'étape (d) planification étant effectuée en fonction de l'usure mécanique du ou des équipements.
- L'usure mécanique est empirique ou théorique.
- Les équipements comprennent au moins un turboréacteur, et/ou au moins un compresseur de turboréacteur.
- Les équipements comprennent au moins un module de lubrification, notamment au moins un module de lubrification de turboréacteur.
- Lors de l'étape (a) enregistrement, les aéronefs appartiennent à différentes compagnies aériennes.
- La base de données de l'étape (b) consultation est une base de données mondiale.
- Les données de fonctionnement de l'étape (c) détermination d'au moins un équipement comprennent le démontage d'un aéronef dudit au moins un équipement.
- Les données de fonctionnement de l'étape (c) détermination d'au moins un équipement comprennent le montage sur un aéronef dudit au moins un équipement.
- Les données de fonctionnement de l'étape (c) détermination d'au moins un équipement comprennent le remplacement dudit au moins un équipement sur un même aéronef.
- Les données de fonctionnement de l'étape (c) détermination et/ou lors de l'étape (a) enregistrement, au moins deux équipements ont été intervertis sur deux aéronefs, éventuellement de deux compagnies aériennes différentes.
- Les aéronefs sont des modèles d'aéronefs différents.
- Les données de vol de l'étape (b) consultation comprennent la charge embarquée dans au moins un ou dans chaque aéronef.
- Les données de vols de l'étape (b) consultation comprennent le nombre de passagers dans au moins un ou dans chaque aéronef.
- Les données de vols de l'étape (b) consultation comprennent le niveau de carburant au décollage pour au moins un ou pour chaque aéronef.
- Les données de vols de l'étape (b) consultation comprennent la météo concernant au moins un ou chaque aéronef, notamment à son décollage et/ou à son atterrissage.
- Les données de vols de l'étape (b) consultation comprennent la vitesse d'ascension pour au moins un ou pour chaque aéronef.
- Les données de vols de l'étape (b) consultation comprennent l'altitude des paliers et/ou l'altitude de croisière pour au moins un ou pour chaque aéronef.
- Les données de vols de l'étape (b) consultation comprennent la pression atmosphérique pour au moins un ou pour chaque aéronef.
- L'étape (d) planification comprend la détermination d'une date d'entretien d'au moins un équipement, et/ou le remplacement d'un consommable d'au moins un équipement.
- L'étape (d) planification comprend la définition de points de contrôle d'au moins un ou de plusieurs équipements.
- L'étape (d) planification comprend la modification d'une date calculée préalablement.
- Lors du vol, notamment lors du fonctionnement des équipements, les équipements appartiennent à différentes compagnies aériennes.
- La date calculée préalablement a été calculée avant l'étape (a) enregistrement et/ou avant l'étape (b) consultation.

L'invention a également pour objet un procédé exécuté par un ordinateur de planification d'entretien d'équipements pour aéronef à identifiant, remarquable en ce que le procédé comprend les étapes informatiques de : (a) enregistrement informatique des identifiants d'aéronefs correspondant aux équipements à entretenir; (b) consultation informatique d'un historique de vol des aéronefs en fonction de leurs identifiants ; (c) création d'un historique informatique des données de fonctionnement des équipements en fonction de l'identifiant de leur aéronef correspondant, et de l'étape (b) consultation ; puis (d) planification, éventuellement informatique, des entretiens des équipements en fonction des données de fonctionnement.

L'invention a également pour objet un système de traitement de données comprenant des moyens de mettre en oeuvre les étapes de la méthode selon l'invention.

L'invention a également pour objet un programme d'ordinateur comprenant des instructions qui, lorsque le programme est exécuté par un ordinateur, conduisent celui-ci à mettre en oeuvre les étapes de la méthode selon l'invention.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles.

### Avantages apportés

Les données de départ pour le calcul des dates d'entretien sont plus proches de la réalité. Elles s'appuient sur des informations sur mesure, et propre à chaque équipement. L'invention permet de s'éloigner d'une date correspondant à une moyenne, en s'orientant vers une date incluant des évènements ou des conditions propres à l'équipement.

L'invention simplifie la gestion et le calcul des dates de révision des turboréacteurs en vue d'optimiser la sécurité. Celle-ci est optimisée en offrant des calculs plus justes, et limite le nombre d'opération nécessaires au calcul des dates. L'invention offre un résultat restant fiable malgré des nombres croissants d'équipements et de compagnies aériennes utilisant lesdits équipements.

La quantité d'information à obtenir pour dresser précisément un plan d'entretien d'une flotte d'avion diminue par rapport à la collecte des données pour chaque équipement pour chaque compagnie aérienne. Le nombre d'échange diminue également. L'effet est de diminuer les risques d'erreurs et d'imprécision. En outre, les données proviennent d'une même base de données. Les risques liés à la conversion des données brutes depuis la base de données sont réduits. Par-là la sécurité d'entretien s'améliore.

Dans le contexte d'un ordinateur et/ou d'un réseau informatique et/ou d'un centre de stockage de données, il devient possible d'économiser de l'énergie électrique tout en garantissant une sécurité et une fiabilité données pour des turbomachines.

### Brève description des dessins

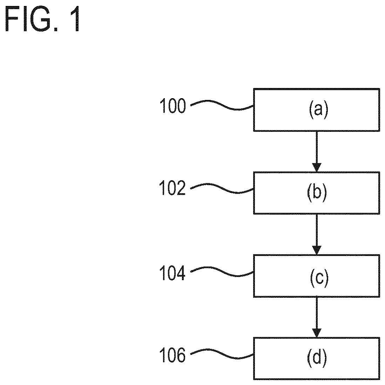

La figure 1 représente un diagramme du procédé de planification d'entretien d'équipements pour aéronef selon l'invention.

### Description des modes de réalisation

La figure 1 représente un diagramme du procédé de planification de maintenance d'au moins un équipement, ou d'un ensemble d'équipements montés sur un ou sur plusieurs aéronefs en service.

Le procédé de planification d'entretien comprend les étapes suivantes et effectuées dans l'ordre qui suit :
(a) enregistrement 100 des identifiants d'aéronefs associés à chacun des équipements, si bien que chaque équipement reçoit un ou plusieurs idenditifiants ;
(b) consultation 102 d'une base de donnée d'enregistrement en temps réel des données de vol des aéronefs à identifiants ;
(c) détermination 104 des données de fonctionnement des équipements en fonction de l'identifiant de leur aéronef et de l'étape (b) consultation 102 ; puis
(d) planification 106 des entretiens des équipements en fonction des données de fonctionnement.

Lors de l'étape (a) enregistrement 100, les équipements forment un ou plusieurs groupes. Le groupe ou les groupes d'équipement comprennent des turboréacteurs, et/ou des compresseurs de turboréacteurs. Il peut également s'agir de modules de lubrification tels des pompes de lubrification dans un turboréacteur. Un équipement peut également être un réducteur épicycloïdal entre une turbine et une soufflante du turboréacteur.

Au cours de l'étape (a) enregistrement 100, les aéronefs enregistrés appartiennent à différentes compagnies aériennes. Chacune d'elle peut comporter différents modèles d'aéronefs. Un même équipement peut être monté sur différents modèles d'avions. Un identifiant d'aéronef peut être une suite alphanumérique de caractères, par exemple du type « ABC1234 », ou encore « WXYZ12EF ». Le nombre de lettres et de chiffres peut varier. Chaque identifiant d'aéronef est unique.

Il peut ressortir de l'étape (a) enregistrement 100, qu'un ou plusieurs équipements ont a été démontés de leur aéronef de départ, ou de leurs aéronefs de départ. Par la suite, certains de ces équipements ont été remontés sur leur aéronef d'origine, ou sur un autre aéronef. Ainsi, certains équipements ont été permutés sur un même aéronef. La permutation peut concerner différents aéronefs simultanément. L'intervention d'équipement peut se produire sur des aéronefs d'une même compagnie, ou de deux compagnies distinctes ; par exemple en raison d'accords entres-elle. Il peut s'agir d'un prêt d'équipement(s) appartement à une entreprise possédant des équipements de rechange d'avance pour éviter qu'un aéronef ne soit immobilité à cause d'un équipement défaillant ou en cours d'entretien. En effet, un aéronef comprend différents équipements avec des durées d'entretien variable. Posséder en surnombre les équipements les plus longs à entretenir permet à un aéronef de repartir sans être pénalisé par la durée d'entretien de ces mêmes équipements.

De tels mouvements d'échanges d'équipements peuvent notamment être effectués sans que l'entreprise en charge de la maintenance et/ou de la planification de la maintenance n'en soit informée. Dès lors, les sollicitations réelles que subit un équipement par rapport à ce qui a été estimé peuvent fortement varier car les manières de solliciter les équipements peuvent varier d'une compagnie à l'autre, ou encore d'un modèle d'aéronef à l'autre. Aussi, l'écart entre la sollicitation réelle et la sollicitation estimée préalablement n'est pas directement communiquée à l'entreprise alors que cette information serait capitale pour le bon entretien et pour une durabilité optimale de l'équipement. Le plan de maintenance doit être modifié en fonction de la manière dont les entreprises exploitent leurs équipements.

A l'issue ou au cours de l'étape (a) enregistrement 100, les dates de montage et/ou de démontage d'un équipement sur un aéronef ou sur plusieurs aéronefs successifs peuvent être indiquées. Les durées pendant lesquelles un ou plusieurs équipements sont montés sur leur(s) aéronef(s) peuvent être indiquées.

Certains équipements peuvent également avoir été remplacés par des équipements neufs qui rentrent à leur tour dans le processus du procédé selon l'invention.

Les données de vols de l'étape (b) consultation 102 comprennent la charge embarquée dans au moins un ou dans chaque aéronef. La charge peut inclure le nombre de passagers et/ou le niveau de carburant au décollage pour au moins un ou pour chaque aéronef. Ces données renseignent sur l'effort produit par un turboréacteur. La manière dont s'effectue l'usure peut être calculée plus finement en conjuguant les informations précédentes avec la météo concernant au moins un ou chaque aéronef ; que ce soit au décollage comme à l'atterrissage. La pression atmosphérique, l'humidité et la température peuvent rentrer en compte, à la fois au décollage et à l'atterrissage.

Les données de vols de l'étape (b) consultation 102 comprennent la vitesse d'ascension. Cette vitesse correspond à la vitesse de montée verticale et/ou la vitesse horizontale pour au moins un ou pour chaque aéronef. La réalisation de paliers, intermédiaire ou en vol de croisière, sont également pris en compte.

La base de données de l'étape (b) consultation 102 est une base de données mondiale. Elle comprend des enregistrements sur une partie du globe ou sur le monde entier. L'enregistrement des données de vol des aéronefs s'effectue en temps réel. A cet effet, les aéronefs peuvent comprendre des transpondeurs communiquant avec des satellites afin de communiquer leurs positions en temps réel à des receveurs. A titre d'exemple, la base de données peut être du type « Flightradar24 ». D'autres bases de données peuvent être employées, tout comme d'autres modes de communication.

Ainsi, l'étape (b) consultation 102 permet de réaliser un historique de fonctionnement des équipements. L'historique peut offrir un recoupement avec les conditions climatiques de fonctionnement et les données variables des aéronefs, telles que son poids et/ou sa vitesse.

L'étape (c) détermination 104 permet d'effectuer un rapprochement entre les informations de l'étape (a) enregistrement 100 et de l'étape (b) consultation 102. Les contraintes subies par les équipements sont estimées en fonction de leur identifiant d'avion, qui est conjugué avec les sollicitations que l'avion a imposées auxdits équipements.

L'étape (d) planification 106 peut comprendre la détermination d'une date d'entretien d'au moins un ou de plusieurs équipements, et/ou le remplacement d'un consommable d'au moins un équipement. L'étape (d) planification comprend la définition de points de contrôle d'au moins un ou de plusieurs équipements.

L'étape (d) planification 106 peut comprendre le calcul d'un score d'intensité d'utilisation d'équipement, la planification reposant sur ledit score. Le score peut comptabiliser les évènements où la charge embarquée dépasse un seuil prédéterminé, et/ou les évènements où la vitesse d'ascension atteint un autre seuil. Le score peut également prendre en compte les moments où les évènements précédents sont conjugués. Grâce à ce score, il peut être établi que l'équipement a été employé dans des conditions critiques, et donc nuisibles pour l'équipement.

L'étape (d) planification 106 peut comprendre une détermination d'usure mécanique du ou des équipements. L'usure peut être théorique, ou empirique. Une usure de palier peut être estimée en fonction de la charge embarquée, notamment la quantité de carburant au décollage et/ou le nombre de passagers. Une telle usure peut être calculée à partir d'usures réelles mesurées physiquement sur d'autres paliers usés. Ces autres paliers peuvent avoir été usés dans des conditions connues, et éventuellement répétées. Une extrapolation devient possible. Les conjugaisons de données de fonctionnement peuvent également être utilisées lors de la détermination d'usure. Les usures peuvent être théoriques, et être estimées grâce à des modèles prédéfinis.

Les scores et les déterminations d'usure peuvent être utilisés simultanément dans le cadre de l'étape (d) planification 106. Les scores et/ou les déterminations peuvent correspondre à des plages de valeurs.

L'étape (d) planification peut être un ajustement d'entretien. Par exemple, une date d'entretien peut être planifiée plus tôt par rapport à une date préalablement calculée, ou par rapport à une date théorique qui suit une fréquence d'entretien constante.

Le procédé peut être effectué sur un ordinateur, également appelé système de traitement de données. A cet effet, il comporte une unité de stockage, et des moyens de calcul opérant un programme d'ordinateur dédié qui effectue les étapes de procédé (a) à (d).

## Revendications

1. Procédé exécuté par un ordinateur de planification d'entretien d'équipements pour aéronef à identifiant, **caractérisé en ce que** le procédé comprend les étapes de :
(a) enregistrement informatique (100) des identifiants d'aéronefs correspondant aux équipements à entretenir;
(b) consultation informatique (102) d'une base de donnée d'enregistrement en temps réel des données de vol des aéronefs en fonction de leurs identifiants ;
(c) détermination informatique (104) des données de fonctionnement des équipements en fonction de l'identifiant de leur aéronef correspondant, et des données de vol de l'étape (b) consultation (102); puis
(d) planification (106) des entretiens des équipements en fonction des données de fonctionnement.

2. Procédé de planification d'entretien selon la revendication 1, **caractérisé en ce que** l'étape (d) planification (106) comprend le calcul d'un score d'intensité d'utilisation d'équipement, la planification d'entretiens de l'étape (d) planification (106) étant effectuée en fonction du score.

3. Procédé de planification d'entretien selon l'une des revendications 1 à 2, **caractérisé en ce que** l'étape (d) planification (106) comprend une détermination d'usure mécanique du ou des équipements, la planification d'entretiens de l'étape (d) planification (106) étant effectuée en fonction de l'usure mécanique du ou des équipements.

4. Procédé de planification d'entretien selon l'une des revendications 1 à 3, **caractérisé en ce que** les équipements comprennent au moins un turboréacteur, et/ou au moins un compresseur de turboréacteur.

5. Procédé de planification d'entretien selon l'une des revendications 1 à 4, **caractérisé en ce que** les équipements comprennent au moins un module de lubrification, notamment au moins un module de lubrification de turboréacteur.

6. Procédé de planification d'entretien selon l'une des revendications 1 à 5, **caractérisé en ce que** les données de fonctionnement de l'étape (c) détermination (104) d'au moins un équipement comprennent le démontage et/ou le montage sur un aéronef dudit au moins un équipement.

7. Procédé de planification d'entretien selon l'une des revendications 1 à 6, **caractérisé en ce que** les données de fonctionnement de l'étape (c) détermination (104) d'au moins un équipement comprennent le remplacement dudit au moins équipement sur un même aéronef.

8. Procédé de planification d'entretien selon l'une des revendications 1 à 7, **caractérisé en ce que** les données de fonctionnement de l'étape (c) détermination (104) et/ou lors de l'étape (a) enregistrement, au moins deux équipements ont été intervertis sur deux aéronefs, éventuellement de deux compagnies aériennes différentes.

9. Procédé de planification d'entretien selon l'une des revendications 1 à 8, **caractérisé en ce que** les données de vol de l'étape (b) consultation (102) comprennent la charge embarquée pour, et/ou dans, au moins un ou dans chaque aéronef.

10. Procédé de planification d'entretien selon l'une des revendications 1 à 9, **caractérisé en ce que** les données de vols de l'étape (b) consultation (102) comprennent la vitesse d'ascension, et/ou le nombre de passagers, et/ou le niveau de carburant au décollage dans au moins un ou dans chaque aéronef.

11. Procédé de planification d'entretien selon l'une des revendications 1 à 10, **caractérisé en ce que** les données de vols de l'étape (b) consultation (102) comprennent le niveau de carburant au décollage pour au moins un ou pour chaque aéronef.

12. Procédé de planification d'entretien selon l'une des revendications 1 à 11, **caractérisé en ce que** l'étape (d) planification (106) comprend la détermination d'une date d'entretien d'au moins un équipement, et/ou le remplacement d'un consommable d'au moins un équipement.

13. Procédé de planification d'entretien selon l'une des revendications 1 à 12, **caractérisé en ce que** l'étape (d) planification (106) comprend la modification d'une date calculée préalablement.

14. Système de traitement de données comprenant des moyens de mettre en oeuvre les étapes de la méthode selon l'une des revendications 1 à 13.

15. Programme d'ordinateur comprenant des instructions qui, lorsque le programme est exécuté par un ordinateur, conduisent celui-ci à mettre en oeuvre les étapes de la méthode selon l'une des revendications 1 à 13.
